# DEMANDE DE BREVET EUROPEEN

(11) **EP 4 480 364 A1**
(43) Date de publication de la demande: **25.12.2024**
(21) Numéro de dépôt: 24181818.6
(22) Date de dépôt: 12.06.2024
(51) Int. Cl.: A47K 10/06, F24H 9/20, F24H 15/37

(54) **RADIATEUR SÈCHE-SERVIETTE ORIENTABLE VERTICALEMENT OU HORIZONTALEMENT**

(30) Priorité: 23.06.2023 FR 2306557
(71) Demandeur: Atlantic Industrie, 85000 La Roche sur Yon (FR)
(72) Inventeur: PRESLE, Laurent, 85000 LA ROCHE-SUR-YON (FR); LE ROUX, Julien, 85150 SAINTE FLAIVE DES LOUPS (FR); CHAGNEAU, Antoine, 85140 ESSARTS EN BOCAGE (FR)
(74) Mandataire: Ipsilon

(57) **Abrégé**

L'invention concerne un radiateur sèche-serviette (10) orientable horizontalement ou verticalement, comprenant :
- au moins une colonne d'alimentation en air (12) s'étendant le long d'un axe d'alimentation (A), et
- une pluralité de caissons de chauffage (30) montés sur ladite au moins une colonne d'alimentation (12)
- au moins un limiteur thermique (62) disposé dans chaque caisson de chauffage pour transmettre un signal de sécurité,
caractérisé en ce que ledit au moins un limiteur thermique (62) est disposé conjointement dans une première (50) et une deuxième (52) portions d'extrémité de chaque caisson de chauffage (30) de manière à pouvoir être disposé dans une zone supérieure du caisson de chauffage lorsque ladite au moins une colonne d'alimentation en air (12) est orientée verticalement ou horizontalement.

## Description

### Domaine technique

La présente invention concerne un radiateur sèche-serviette.

En particulier, la présente invention concerne un radiateur sèche-serviette comportant une colonne d'alimentation en air communiquant avec des caissons de chauffage.

### Arrière-plan technologique

Il existe un type de radiateur sèche-serviette comprenant une colonne d'alimentation en air et une pluralité de caisson de chauffage connectés à cette colonne d'alimentation en air. Des organes de chauffage sont disposés dans les caissons de chauffage pour chauffer l'air en circulation à l'intérieur de la colonne d'alimentation en air. Des orifices formés dans les caissons de chauffage permettent de diffuser de l'air chaud dans une pièce où est installé le radiateur sèche-serviette. Un exemple d'un tel radiateur sèche-serviette est par exemple décrit dans la demande de brevet européen EP3578091.

Il est connu que les radiateurs sèche-serviettes comprennent des moyens de détermination de la température à l'intérieur des caissons de chauffage. Ces moyens de détermination permettent de connaître la température du caisson de chauffage. Cette détermination de température est généralement requise par la norme et permet des fonctionnalités de régulation et de sécurité thermiques pour le radiateur sèche-serviette.

La position des thermostats est primordiale pour garantir la bonne régulation et la sécurité thermiques du radiateur. Le thermostat de sécurité est généralement disposé à une position supérieure du caisson de chauffage là où la température du caisson de chauffage est maximale. Le thermostat de régulation est lui généralement disposé au niveau d'une position inférieure là où la température du radiateur est minimale.

La disposition des thermostats de sécurité et de régulation ainsi que la conception du radiateur sèche-serviette est donc généralement prévue pour une seule orientation du radiateur sèche-serviette. Il n'est ainsi pas possible de disposer un radiateur sèche-serviette horizontalement si sa conception a été prévue comme verticale. Le thermostat de sécurité ne serait pas disposé au bon endroit ce qui ne serait pas règlementaire et dangereux pour les utilisateurs. Le thermostat de régulation ne serait également pas disposé au bon endroit ce qui ne permettrait pas une régulation efficace de la température du radiateur sèche-serviette.

Il existe donc un besoin pour un radiateur sèche-serviette plus flexible permettant une utilisation dans différentes orientations du radiateur sèche-serviette.

### Résumé de l'invention

Pour cela, l'invention propose un radiateur sèche-serviette orientable horizontalement ou verticalement, comprenant :
- au moins une colonne d'alimentation en air s'étendant le long d'un axe d'alimentation, et
- une pluralité de caissons de chauffage montés sur ladite au moins une colonne d'alimentation, transversalement à l'axe d'alimentation, chaque caisson de chauffage étant en communication de fluide avec ladite au moins une colonne d'alimentation en air, chaque caisson de chauffage définissant une première portion supérieure lorsque la colonne d'alimentation est orientée horizontalement et une deuxième portion supérieure lorsque la colonne d'alimentation est orientée verticalement,
- au moins un organe de chauffage disposé dans chaque caisson de chauffage,
- un contrôleur pour contrôler les organes de chauffage, et
- au moins un limiteur thermique disposé dans chaque caisson de chauffage pour transmettre un signal de sécurité lorsque la température dans le caisson de chauffage atteint un seuil de température représentatif d'une surchauffe, caractérisé en ce que ledit au moins un limiteur thermique est disposé conjointement dans la première et la deuxième portions supérieures de chaque caisson de chauffage de manière à pouvoir être disposé dans une portion supérieure du caisson de chauffage lorsque ladite au moins une colonne d'alimentation en air est orientée verticalement ou horizontalement.

Selon un mode de réalisation du radiateur sèche-serviette, ledit contrôleur est configuré pour stopper le fonctionnement de l'organe de chauffage lorsque le contrôleur reçoit ledit signal de sécurité.

Selon un mode de réalisation du radiateur sèche-serviette, le radiateur sèche-serviette comprend, pour chaque caisson de chauffage :
- soit un limiteur thermique disposé conjointement dans la première et la deuxième portions supérieures,
- soit deux limiteurs thermiques disposés respectivement dans la première portion supérieure et la deuxième portion supérieure.

Selon un mode de réalisation du radiateur sèche-serviette, les première et deuxième portions supérieures de chaque caisson de chauffage se recouvrent au niveau d'une portion supérieure commune dudit caisson de chauffage, ledit au moins un limiteur thermique étant disposé dans ladite portion supérieure commune de chaque caisson de chauffage.

Selon un mode de réalisation du radiateur sèche-serviette, ledit au moins un limiteur thermique comprend pour chaque caisson de chauffage :
- un limiteur thermique horizontal disposé dans la première portion supérieure et configuré pour transmettre au contrôleur un premier signal de sécurité lorsque la température dans le caisson de chauffage atteint ledit seuil de température représentatif d'une surchauffe, et
- un limiteur thermique vertical disposé dans la deuxième portion supérieure et configuré pour transmettre au contrôleur un deuxième signal de sécurité lorsque la température dans le caisson de chauffage atteint ledit seuil de température représentatif d'une surchauffe.

Selon un mode de réalisation du radiateur sèche-serviette, celui-ci comprend en outre un organe de détermination de l'orientation horizontale ou verticale de ladite au moins une colonne d'alimentation, ledit organe de détermination de l'orientation étant configuré pour transmettre au contrôleur :
- un premier signal d'orientation lorsque ladite au moins une colonne d'alimentation est déterminée comme étant orientée horizontalement, et
- un deuxième signal d'orientation lorsque ladite au moins une colonne d'alimentation est déterminée comme étant orientée verticalement.

Selon un mode de réalisation du radiateur sèche-serviette, l'organe de détermination de l'orientation est l'un parmi un contacteur à bille associé à une pièce mobile, un capteur d'angle résistif ou codeur associé à une pièce mobile, un gyroscope et une interface homme-machine permettant à un utilisateur de déclarer l'orientation de ladite au moins une colonne d'alimentation en air.

Selon un mode de réalisation du radiateur sèche-serviette, le contrôleur est configuré pour stopper le fonctionnement de l'organe de chauffage lorsque le contrôleur reçoit :
- le premier signal d'orientation et le premier signal de sécurité, ou
- le deuxième signal d'orientation et le deuxième signal de sécurité.

Selon un mode de réalisation du radiateur sèche-serviette, celui-ci comprend en outre au moins un capteur de régulation thermique, chaque caisson de chauffage présentant une première portion inférieure lorsque la colonne d'alimentation est orientée horizontalement et une deuxième portion inférieure lorsque la colonne d'alimentation est orientée verticalement, ledit au moins un capteur de régulation thermique étant disposé dans la première portion inférieure de l'un des caissons de chauffage et/ou la deuxième portion inférieure de l'un des caissons de chauffage.

Selon un mode de réalisation du radiateur sèche-serviette, ledit au moins un capteur de régulation thermique est configuré pour mesurer une température dans ledit au moins un caisson de chauffage et transmettre un signal de consigne lorsque la température dans le caisson de chauffage atteint un seuil de température de régulation.

Selon un mode de réalisation du radiateur sèche-serviette, le radiateur sèche-serviette comprend :
- soit un capteur de régulation thermique disposé conjointement dans la première et la deuxième portions inférieures d'un même caisson de chauffage disposé à une extrémité inférieure de la colonne d'alimentation en air,
- soit deux capteurs de régulation thermique disposés respectivement dans la première portion inférieure de l'un parmi les caissons de chauffage et la deuxième portion inférieure dudit caisson de chauffage disposé à une extrémité inférieure de la colonne d'alimentation en air.

Selon un mode de réalisation du radiateur sèche-serviette, la pluralité de caissons de chauffage définit un caisson inférieur disposé à une extrémité inférieure de la colonne d'alimentation en air, les première et deuxième portions inférieures dudit caisson inférieur se recouvrant au niveau d'une portion inférieure commune dudit caisson inférieur, ledit capteur de régulation thermique étant disposé dans ladite portion inférieure commune.

Selon un mode de réalisation du radiateur sèche-serviette, ledit au moins un capteur de régulation thermique comprend :
- un capteur de régulation thermique horizontal disposé dans une première portion inférieure de l'un parmi les caissons de chauffage et configuré pour transmettre au contrôleur un premier signal de consigne lorsque la température dans le caisson de chauffage atteint ledit seuil de température de régulation, et
- un capteur de régulation thermique vertical disposé dans la deuxième portion inférieure et configuré pour transmettre au contrôleur un deuxième signal de consigne lorsque la température dans le caisson de chauffage atteint ledit seuil de température de régulation.

Selon un mode de réalisation du radiateur sèche-serviette, chaque caisson de chauffage définit :
- une dimension longitudinale maximum le long de l'axe d'alimentation entre un bord supérieur longitudinal et un bord inférieur longitudinal, et
- une dimension transversale maximum prise transversalement à l'axe d'alimentation entre un bord supérieur transversal et un bord inférieur transversal,
dans lequel :
* la première portion supérieure est définie comme étant une portion du caisson de chauffage s'étendant, à partir du bord supérieur transversal et vers le bord inférieur transversal, sur distance inférieure ou égale à 30% de la dimension transversale maximum,
* la deuxième portion supérieure est définie comme étant une portion du caisson de chauffage s'étendant, à partir du bord supérieur longitudinal et vers le bord inférieur transversal, sur une distance inférieure ou égale à 30% de la dimension longitudinale maximum.

Selon un mode de réalisation du radiateur sèche-serviette :
* la première portion inférieure est définie comme étant une portion du caisson de chauffage s'étendant, à partir du bord inférieur transversal et vers le bord supérieur transversal, sur distance inférieure ou égale à 30% de la dimension transversale maximum,
* la deuxième portion inférieure est définie comme étant une portion du caisson de chauffage s'étendant, à partir du bord inférieur longitudinal et vers le bord supérieur transversal, sur une distance inférieure ou égale à 30% de la dimension longitudinale maximum.

Selon un mode de réalisation du radiateur sèche-serviette, celui-ci comprend en outre au moins un ventilateur disposé dans la colonne d'alimentation en air pour alimenter en air un ou plusieurs parmi les caissons de chauffage, chaque caisson de chauffage comprenant au moins un orifice de sortie d'air de sorte que l'air alimentant un caisson de chauffage circule depuis au moins un orifice d'alimentation de la colonne d'alimentation en air vers ledit au moins un orifice de sortie, ledit au moins un organe de chauffage étant positionné dans ledit caisson de chauffage de sorte à chauffer l'air circulant à l'intérieur du caisson de chauffage.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente une vue en perspective d'un radiateur sèche-serviette comprenant une colonne d'alimentation en air et des caissons de chauffage fixés à la colonne d'alimentation;
[fig. 2] La figure 2 représente une vue en perspective éclatée du radiateur sèche-serviette de la figure 1 ;
[fig. 3] La figure 3 une vue schématique de face du radiateur sèche-serviette de la figure 1 selon une orientation verticale, le radiateur sèche-serviette comprenant un capteur de régulation thermique, chaque caisson de chauffage comprenant également au moins un limiteur thermique;
[fig. 4] La figure 4 une vue schématique de face du radiateur sèche-serviette de la figure 3 selon une orientation horizontale.

### Description de mode(s) de réalisation

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

Il est proposé un radiateur sèche serviette orientable horizontalement ou verticalement. En d'autres termes, le radiateur sèche-serviette peut être installé indifféremment selon une orientation verticale ou horizontale tout en étant pleinement fonctionnel et sécurisé vis-à-vis d'une potentielle surchauffe.

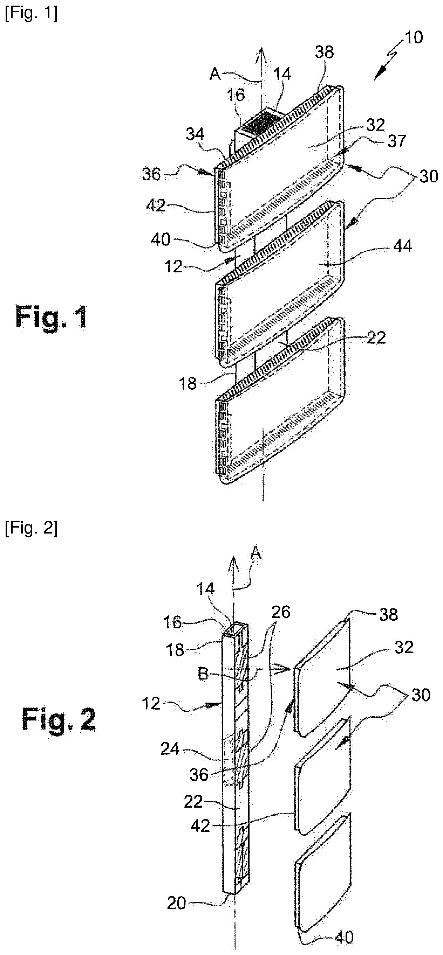

En référence à la figure 1, le radiateur sèche-serviette 10 comprend une colonne d'alimentation en air 12 s'étendant le long d'un axe d'alimentation A.

Le radiateur sèche-serviette 10 comprend en outre une pluralité de caissons de chauffage 30 chauffage montés sur ladite au moins une colonne d'alimentation en air 12. Les caissons de chauffage 30 sont fixés à la colonne d'alimentation en air 12, par exemple au niveau d'une face avant 22.

Chaque caisson de chauffage 30 est disposé sur la colonne d'alimentation en air 12 transversalement à l'axe d'alimentation A.

Chaque caisson de chauffage 30 comprend une paroi avant de caisson 32, une paroi arrière de caisson 34 et une paroi latérale de caisson 36 s'étendant transversalement entre les parois avant 32 et arrière 34 de caisson. La paroi latérale de caisson 36 comprend une face supérieure de caisson 38, une face inférieure de caisson 40 ainsi que deux faces latérales de caisson 42.

Les parois avant 32, arrière 34 et latérales 36 de caisson définissent un espace intérieur de caisson 37.

Chaque caisson de chauffage 30 a sensiblement la forme d'un parallélépipède lorsqu'il est observé face à la paroi avant 32. De manière alternative, la paroi avant 32, et donc le caisson de chauffage 30, peut avoir toute forme permettant d'être montée sur la colonne d'alimentation en air 12, comme par exemple une paroi avant circulaire. Chaque caisson de chauffage 30 est de préférence est défini par une hauteur prise le long de l'axe d'alimentation A, une largeur prise perpendiculairement à l'axe d'alimentation A et une profondeur prise perpendiculairement par rapport à la largeur et à la hauteur.

Chaque caisson de chauffage 30 comprend un organe de chauffage 44. Cet organe de chauffage 44 est disposé dans l'espace intérieur de caisson 37. L'organe de chauffage 44 est par exemple de la forme d'une plaque résistive alimentée électriquement pour générer de la chaleur. L'organe de chauffage 30 s'étend de manière préférentielle entre la colonne d'alimentation en air 12 et la paroi avant 32.

Le radiateur sèche-serviette 10 comprend en outre un contrôleur (non visible) pour contrôler les organes de chauffage 44. Le contrôleur permet notamment de commander la mise en route de l'un ou plusieurs parmi les organes de chauffage 44.

La colonne d'alimentation en air 12 comprend au moins un orifice d'entrée d'air 14, par exemple disposé sur une face d'extrémité supérieure 16 de la colonne d'alimentation en air 12. L'orifice d'entrée 14 peut être de la forme d'une grille.

La colonne d'alimentation en air 12 peut prévoir une pluralité d'orifices d'entrée d'air 14, notamment disposés sur des faces ou des portions de faces différentes de la colonne d'alimentation en air 12. Ces orifices d'entrée 14 peuvent par exemple être disposés au niveau de l'un ou plusieurs parmi une face arrière 18, une face d'extrémité inférieure 20, la face avant 22 ou bien la face d'extrémité supérieure 16.

Les caissons de chauffage 30 sont en communication de fluide avec la colonne d'alimentation en air au niveau d'orifices d'alimentation 26 visibles en figure 2. Chaque caisson de chauffage 30 est monté sur la colonne d'alimentation en regard d'un orifice d'alimentation 26. L'air s'écoule au travers de l'orifice d'alimentation 26 dans le caisson de chauffage 30 selon une direction d'entrée B.

La colonne d'alimentation en air 12 comprend un ventilateur 24 pour générer une circulation d'air depuis l'orifice d'entrée 14 vers les orifices d'alimentation 26, et donc vers les caissons de chauffage 30. L'action du ventilateur 24 permet ainsi l'alimentation en air des caissons de chauffage 30.

Selon une variante, la colonne d'alimentation en air 12 peut comprendre une pluralité de ventilateurs 24 disposés le long de l'axe d'alimentation A. Ainsi, chaque ventilateur 24 peut être disposé de manière à alimenter un ou plusieurs caissons de chauffage 30 prédéterminé.

Chaque caisson de chauffage 30 comprend une pluralité d'orifices de sortie 46 communiquant avec l'espace intérieur de caisson 37. Ainsi, une circulation d'air peut intervenir depuis les orifices d'entrée 14 vers les orifices de sortie 46 en passant au travers des orifices d'alimentation 26.

L'organe de chauffage 44 est positionné dans l'espace intérieur de caisson 37 de sorte que l'air provenant de l'orifice d'alimentation 26 entre en contact avec l'organe de chauffage 44 avant d'atteindre un orifice de sortie 46. La température de l'air peut donc être augmentée via l'organe de chauffage 44 lorsque celui-ci est en fonctionnement.

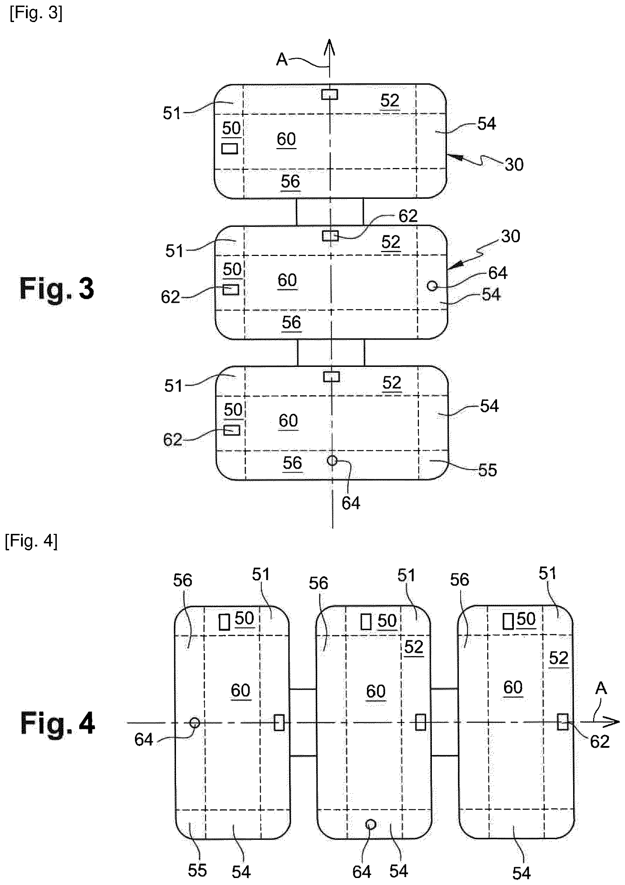

Les figures 2 et 3 représente le radiateur sèche-serviette 10 respectivement dans une configuration verticale et une configuration horizontale. On entend par configuration verticale, une configuration dans laquelle l'axe d'alimentation A est orienté verticalement. De la même manière, on entend par configuration horizontale, une configuration dans laquelle l'axe d'alimentation A est orienté horizontalement. Le radiateur sèche-serviette 10 est configuré pour être indifféremment installé dans une configuration verticale ou horizontale. De plus, le radiateur sèche-serviette 10 est configuré de sorte que son orientation peut être modifiée dans la vie du produit. Il est ainsi possible d'utiliser un même radiateur sèche-serviette 10 dans une configuration verticale puis horizontale, et inversement.

En référence aux figures 3 et 4, chaque caisson de chauffage 30 définit une première 50, une deuxième 52, une troisième 54 et une quatrième 56 portions d'extrémité. Chacune des première 50, deuxième 52, troisième 54 et quatrième 56 portions d'extrémité correspond à une portion du caisson de chauffage 30 disposée à proximité d'un bord du caisson de chauffage 30.

La première portion d'extrémité 50 est disposée au niveau d'une zone supérieure du caisson de chauffage 30 lorsque la colonne d'alimentation en air 12 est orientée horizontalement. La première portion d'extrémité 50 est disposée à proximité ou le long de l'une des faces latérales de caisson 42.

La deuxième portion d'extrémité 52 est disposée au niveau d'une zone supérieure du caisson de chauffage 30 lorsque la colonne d'alimentation en air 12 est orientée verticalement. La deuxième portion d'extrémité 52 est disposée à proximité ou le long de la face supérieure de caisson 38.

La troisième portion d'extrémité 54 est disposée au niveau d'une zone inférieure du caisson de chauffage 30 lorsque la colonne d'alimentation en air 12 est orientée horizontalement. La troisième portion d'extrémité 54 est disposée à proximité ou le long de l'une des faces latérales de caisson 42. La troisième portion d'extrémité 54 est disposée à l'opposé de la première portion d'extrémité 50 par rapport à une zone centrale de caisson 60.

La quatrième portion d'extrémité 56 est disposée au niveau d'une zone inférieure du caisson de chauffage 30 lorsque la colonne d'alimentation en air 12 est orientée verticalement. La quatrième portion d'extrémité 56 est disposée à proximité ou le long de la face inférieure de caisson 40. La quatrième portion d'extrémité 56 est disposée à l'opposé de la deuxième portion d'extrémité 52 par rapport à la zone centrale de caisson 60.

Les première 50, deuxième 52, troisième 54 et quatrième 56 portions d'extrémité peuvent être de toute forme et, selon la compatibilité avec les configurations décrites ci-après, non jointives. De manière préférée, chacune des première 50, deuxième 52, troisième 54 et quatrième 56 portions d'extrémité correspond à un volume parallélépipédique partant d'un bord du caisson de chauffage 30 et s'étendant vers la zone centrale 60.

Chaque caisson de chauffage 30 définit une dimension longitudinale maximum et une dimension transversale maximum.

La dimension longitudinale maximum est prise le long de l'axe d'alimentation A entre un bord supérieur longitudinal et un bord inférieur longitudinal. La dimension transversale maximum est prise transversalement à l'axe d'alimentation A entre un bord supérieur transversal et un bord inférieur transversal.

La première portion d'extrémité 50 est définie comme étant une portion du caisson de chauffage 30 s'étendant, à partir du bord supérieur transversal et vers le bord inférieur transversal, sur une distance inférieure ou égale à 30% de la dimension transversale maximum

La deuxième portion d'extrémité 52 est définie comme étant une portion du caisson de chauffage 30 s'étendant, à partir du bord supérieur longitudinal et vers le bord inférieur transversal, sur une distance inférieure ou égale à 30% de la dimension longitudinale maximum.

De manière similaire, la troisième portion d'extrémité 54 est définie comme étant une portion du caisson de chauffage 30 s'étendant, à partir du bord inférieur transversal et vers le bord supérieur transversal, sur distance inférieure ou égale à 30% de la dimension transversale maximum.

La quatrième portion d'extrémité 56 est définie comme étant une portion du caisson de chauffage s'étendant, à partir du bord inférieur longitudinal et vers le bord supérieur transversal, sur une distance inférieure ou égale à 30% de la dimension longitudinale maximum.

Le radiateur sèche-serviette 10 comprend en outre au moins un limiteur thermique 62 disposé dans chaque caisson de chauffage 30 pour contrôler que la température dans chacun des caissons de chauffage 30 ne dépasse pas un seuil prédéterminé. En particulier, chaque limiteur thermique 62 est configuré pour transmettre un signal de sécurité au contrôleur lorsque la température dans le caisson de chauffage 30 atteint un seuil de température représentatif d'une surchauffe. Cette surchauffe peut par exemple être déterminé lorsque la température à l'intérieur du caisson de chauffage 30 est supérieure ou égale à 50°C.

Le radiateur sèche-serviette 10 est configuré de telle sorte que ledit au moins un limiteur thermique 62 est toujours disposé au niveau d'une zone supérieure du caisson de chauffage, que la colonne d'alimentation en air 12 soit horizontale ou verticale. Pour cela, ledit au moins un limiteur thermique 62 est disposé conjointement dans les première 50 et deuxième 52 portions d'extrémité.

Selon une première configuration, chaque caisson de chauffage 30 comprend deux limiteurs thermiques 62 disposés respectivement dans la première portion d'extrémité 50 et la deuxième portion d'extrémité 52. Ainsi, chaque caisson de chauffage 30 comprend un limiteur thermique 62 disposé dans une zone supérieure du caisson de chauffage 30 que la colonne d'alimentation en air soit orientée horizontalement ou verticalement.

Dans cette première configuration, ledit au moins un limiteur thermique comprend pour chaque caisson de chauffage un limiteur thermique horizontal et un limiteur thermique vertical.

Le limiteur thermique horizontal est disposé dans la première portion d'extrémité 50 et configuré pour transmettre au contrôleur un premier signal de sécurité lorsque la température dans le caisson de chauffage 30 atteint ledit seuil de température représentatif d'une surchauffe.

Le limiteur thermique vertical est disposé dans la deuxième portion d'extrémité 52 et configuré pour transmettre au contrôleur un deuxième signal de sécurité lorsque la température dans le caisson de chauffage 30 atteint ledit seuil de température représentatif d'une surchauffe.

Le radiateur sèche-serviette 10 comprend également de préférence un organe de détermination de l'orientation horizontale ou verticale de ladite au moins une colonne d'alimentation 12. La détermination de l'orientation de la colonne d'alimentation 12 permet d'inhiber l'un des limiteurs thermiques horizontal ou vertical ou bien de savoir le signal provenant de quel limiteur thermique il faut considérer. Cet organe de détermination peut être un capteur, tel qu'un gyroscope, ou bien une information transmise par l'installateur lui-même, notamment par le biais d'une interface homme-machine. Dans ce dernier cas, il peut être prévu qu'il faille renseigner l'orientation du sèche-serviette 10 au démarrage de celui-ci. Le capteur peut également être l'un parmi un contacteur à bille associé à une pièce mobile et un capteur d'angle résistif ou codeur associé à une pièce mobile. La pièce mobile dans ces deux derniers types de capteur étant configurée pour actionner le capteur lorsque le sèche-serviette est dans une orientation prédéterminée.

Cet organe de détermination de l'orientation est configuré pour transmettre au contrôleur un premier signal d'orientation lorsque ladite au moins une colonne d'alimentation 12 est déterminée comme étant orientée horizontalement. L'organe de détermination de l'orientation est également configuré pour transmettre au contrôleur un deuxième signal d'orientation lorsque ladite au moins une colonne d'alimentation 12 est déterminée comme étant orientée verticalement.

Ainsi, lequel le contrôleur peut être configuré pour stopper le fonctionnement d'un organe de chauffage 44 lorsque le contrôleur reçoit soit le premier signal d'orientation et le premier signal de sécurité, représentatif d'une surchauffe dans ce caisson de chauffage 30 quand le radiateur sèche-serviette 10 est horizontal, soit le deuxième signal d'orientation et le deuxième signal de sécurité, représentatif d'une surchauffe dans ce caisson de chauffage 30 quand le radiateur sèche-serviette 10 est vertical.

Selon une deuxième configuration, chaque caisson de chauffage 30 comprend un seul limiteur thermique 62 disposé conjointement dans la première 50 et la deuxième 52 portions d'extrémité. En d'autres termes, le limiteur thermique 62 est disposé dans un zone qui appartient à la fois à la première 50 et la deuxième 52 portions d'extrémité. Ceci implique que les première 50 et deuxième 52 portions d'extrémité de chaque caisson de chauffage 30 se recouvrent au niveau d'une portion supérieure commune 51 dudit caisson de chauffage 30. Le limiteur thermique 62 est disposé dans ladite portion supérieure commune 51 de chaque caisson de chauffage 30. Ainsi, le limiteur thermique 62 est disposé dans une zone supérieure du caisson de chauffage 30 que la colonne d'alimentation en air 12 soit orientée horizontalement ou verticalement.

Dans cette deuxième configuration, le radiateur sèche-serviette peut s'affranchir de l'organe de détermination de l'orientation car le contrôleur peut stopper le fonctionnement d'un organe de chauffage 44 à réception d'un signal de sécurité provenant du limiteur thermique, quel que soit l'orientation. L'organe de détermination de l'orientation est toutefois compatible avec cette deuxième configuration.

La radiateur sèche-serviette 10 peut comprendre en outre au moins un capteur de régulation thermique 64. Le capteur de régulation thermique 64 a pour fonction de permettre la régulation du chauffage fourni par le radiateur sèche-serviette 10 en fonction d'une température de consigne. Pour le confort de l'utilisateur, il est préférable que ce capteur de régulation 64 soit disposé au niveau d'une zone inférieure du radiateur sèche-serviette 10 pour garantir l'atteinte de la température de consigne.

Ledit au moins un capteur de régulation est configuré pour transmettre un signal de régulation au contrôleur lorsque la température dans le caisson de chauffage 30 atteint un seuil de température de régulation. Ce seuil de température de régulation est par exemple supérieur ou égal à 40°C. Le seuil de température de régulation dépend de la température de consigne mais peut être différent de celle-ci. Cette température de consigne peut être modifiée par l'utilisateur.

Le radiateur sèche-serviette 10 peut comprendre un ou deux capteurs de régulation thermique 64 pour l'ensemble des caissons de chauffage 30.

Le radiateur sèche-serviette 10 est configuré de telle sorte que ledit au moins un capteur de régulation thermique 64 est toujours disposé au niveau d'une zone inférieure du caisson de chauffage, que la colonne d'alimentation en air 12 soit horizontale ou verticale. Pour cela, ledit au moins un capteur de régulation thermique 64 est disposé conjointement dans la troisième portion d'extrémité 54 de l'un des caissons de chauffage 30 et/ou la quatrième portion d'extrémité 56 de l'un des caissons de chauffage 30.

Ledit au moins un capteur de régulation thermique 64 est configuré pour mesurer une température et transmettre au contrôleur un signal de consigne lorsque la température dans le caisson de chauffage 30 atteint un seuil de température de régulation.

Selon une troisième configuration, compatible avec les première et deuxième configurations, le radiateur sèche-serviette 10 comprend au moins deux capteurs de régulation thermique 64 disposés respectivement dans la troisième portion d'extrémité 54 de l'un parmi les caissons de chauffage 30 et la quatrième portion d'extrémité 56 d'un caisson de chauffage disposé à une extrémité inférieure de la colonne d'alimentation en air 12.

Dans cette troisième configuration le radiateur sèche-serviette 10 comprend un capteur de régulation thermique horizontal et un capteur de régulation thermique vertical.

Le capteur de régulation thermique horizontal est disposé dans la troisième portion d'extrémité 54 de l'un parmi les caissons de chauffage et configuré pour transmettre au contrôleur un premier signal de consigne lorsque la température dans le caisson de chauffage 30 atteint ledit seuil de température de régulation.

Le capteur de régulation thermique vertical est disposé dans la quatrième portion d'extrémité 56 et configuré pour transmettre au contrôleur un deuxième signal de consigne lorsque la température dans le caisson de chauffage 30 atteint ledit seuil de température de régulation.

Selon une quatrième configuration, compatible avec les première et deuxième configurations, le radiateur sèche-serviette 10 comprend un seul capteur de régulation thermique disposé conjointement dans la troisième 54 et la quatrième 56 portions d'extrémité d'un même caisson de chauffage 30 disposé à une extrémité inférieure de la colonne d'alimentation en air 12. Ce capteur de régulation thermique 64 est donc disposé au niveau d'une caisson inférieur du radiateur sèche-serviette. Le capteur de régulation thermique 64 est disposé à la fois dans la troisième 54 et la quatrième 56 portions d'extrémité du caisson inférieur.

Les troisième 54 et quatrième 56 portions d'extrémité dudit caisson inférieur 30 se recouvrent au niveau d'une portion inférieure commune 55 dudit caisson inférieur. Le capteur de régulation thermique est disposé dans ladite portion inférieure commune 55.

## Revendications

1. Radiateur sèche-serviette (10) orientable horizontalement ou verticalement, comprenant :
- au moins une colonne d'alimentation en air (12) s'étendant le long d'un axe d'alimentation (A), et
- une pluralité de caissons de chauffage (30) montés sur ladite au moins une colonne d'alimentation (12), transversalement à l'axe d'alimentation (A), chaque caisson de chauffage (30) étant en communication de fluide avec ladite au moins une colonne d'alimentation en air (12), chaque caisson de chauffage (30) définissant une première (50) et une deuxième (52) portions d'extrémité disposées au niveau d'une zone supérieure du caisson de chauffage respectivement lorsque la colonne d'alimentation en air (12) est orientée horizontalement et verticalement,
- au moins un organe de chauffage (44) disposé dans chaque caisson de chauffage,
- un contrôleur pour contrôler les organes de chauffage (44), et
- au moins un limiteur thermique (62) disposé dans chaque caisson de chauffage pour transmettre un signal de sécurité lorsque la température dans le caisson de chauffage atteint un seuil de température représentatif d'une surchauffe, **caractérisé en ce que** ledit au moins un limiteur thermique (62) est disposé conjointement dans la première (50) et la deuxième (52) portions d'extrémité de chaque caisson de chauffage (30) de manière à pouvoir être disposé dans la zone supérieure du caisson de chauffage lorsque ladite au moins une colonne d'alimentation en air (12) est orientée verticalement ou horizontalement.

2. Radiateur sèche-serviette (10) selon la revendication 1, ledit contrôleur est configuré pour stopper le fonctionnement de l'organe de chauffage (44) lorsque le contrôleur reçoit ledit signal de sécurité.

3. Radiateur sèche-serviette (10) selon la revendication 1 ou 2, comprenant, pour chaque caisson de chauffage :
- soit un limiteur thermique (62) disposé conjointement dans la première (50) et la deuxième (52) portions d'extrémité,
- soit deux limiteurs thermiques (62) disposés respectivement dans la première portion d'extrémité (50) et la deuxième portion d'extrémité (52).

4. Radiateur sèche-serviette (10) selon l'une des revendications 1 à 3, dans lequel les première (50) et deuxième (52) portions d'extrémité de chaque caisson de chauffage (30) se recouvrent au niveau d'une portion supérieure commune (51) dudit caisson de chauffage (30), ledit au moins un limiteur thermique (62) étant disposé dans ladite portion supérieure commune (51) de chaque caisson de chauffage.

5. Radiateur sèche-serviette (10) selon l'une des revendications 1 à 3, ledit au moins un limiteur thermique (62) comprend pour chaque caisson de chauffage :
- un limiteur thermique (62) horizontal disposé dans la première portion d'extrémité (50) et configuré pour transmettre au contrôleur un premier signal de sécurité lorsque la température dans le caisson de chauffage (30) atteint ledit seuil de température représentatif d'une surchauffe, et
- un limiteur thermique (62) vertical disposé dans la deuxième portion d'extrémité (52) et configuré pour transmettre au contrôleur un deuxième signal de sécurité lorsque la température dans le caisson de chauffage (30) atteint ledit seuil de température représentatif d'une surchauffe.

6. Radiateur sèche-serviette (10) selon la revendication 5, comprenant en outre un organe de détermination de l'orientation horizontale ou verticale de ladite au moins une colonne d'alimentation en air (12), ledit organe de détermination de l'orientation étant configuré pour transmettre au contrôleur :
- un premier signal d'orientation lorsque ladite au moins une colonne d'alimentation en air (12) est déterminée comme étant orientée horizontalement, et
- un deuxième signal d'orientation lorsque ladite au moins une colonne d'alimentation est déterminée comme étant orientée verticalement.

7. Radiateur sèche-serviette (10) selon la revendication 6, dans lequel l'organe de détermination de l'orientation est l'un parmi un contacteur à bille associé à une pièce mobile, un capteur d'angle résistif ou codeur associé à une pièce mobile, un gyroscope et une interface homme-machine permettant à un utilisateur de déclarer l'orientation de ladite au moins une colonne d'alimentation en air.

8. Radiateur sèche-serviette (10) selon la revendication 6 ou 7, dans lequel le contrôleur est configuré pour stopper le fonctionnement de l'organe de chauffage lorsque le contrôleur reçoit :
- le premier signal d'orientation et le premier signal de sécurité, ou
- le deuxième signal d'orientation et le deuxième signal de sécurité.

9. Radiateur sèche-serviette (10) selon l'une des revendications précédentes, comprenant en outre au moins un capteur de régulation thermique (64), chaque caisson de chauffage (30) présentant une troisième (54) et une quatrième (56) portions d'extrémité disposées au niveau d'une zone inférieure du caisson de chauffage respectivement lorsque la colonne d'alimentation en air (12) est orientée horizontalement et verticalement, ledit au moins un capteur de régulation thermique (64) étant disposé dans la troisième portion d'extrémité (54) de l'un des caissons de chauffage et/ou la quatrième portion d'extrémité (56) de l'un des caissons de chauffage.

10. Radiateur sèche-serviette (10) selon la revendication 9, dans lequel ledit au moins un capteur de régulation thermique (64) est configuré pour mesurer une température dans ledit au moins un caisson de chauffage et transmettre un signal de consigne lorsque la température dans le caisson de chauffage (30) atteint un seuil de température de régulation.

11. Radiateur sèche-serviette (10) selon la revendication 9 ou 10, comprenant :
- soit un capteur de régulation thermique (64) disposé conjointement dans la troisième (54) et la quatrième (56) portions d'extrémité d'un même caisson de chauffage disposé à une extrémité inférieure de la colonne d'alimentation en air,
- soit deux capteurs de régulation thermique (64) disposés respectivement dans la troisième portion d'extrémité (54) de l'un parmi les caissons de chauffage (30) et la quatrième portion d'extrémité (56) dudit caisson de chauffage disposé à l'extrémité inférieure de la colonne d'alimentation en air (12).

12. Radiateur sèche-serviette (10) selon l'une quelconque des revendications 9 à 11, dans lequel la pluralité de caissons de chauffage définit un caisson inférieur disposé à une extrémité inférieure de la colonne d'alimentation en air (12), les troisième (54) et quatrième (56) portions d'extrémité dudit caisson inférieur se recouvrant au niveau d'une portion inférieure commune dudit caisson inférieur, ledit capteur de régulation thermique (64) étant disposé dans ladite portion inférieure commune.

13. Radiateur sèche-serviette (10) selon l'une quelconque des revendications 9 à 11, dans lequel ledit au moins un capteur de régulation thermique (64) comprend :
- un capteur de régulation thermique (64) horizontal disposé dans la troisième portion d'extrémité (54) de l'un parmi les caissons de chauffage et configuré pour transmettre au contrôleur un premier signal de consigne lorsque la température dans le caisson de chauffage atteint ledit seuil de température de régulation, et
- un capteur de régulation thermique (64) vertical disposé dans la quatrième portion d'extrémité (56) et configuré pour transmettre au contrôleur un deuxième signal de consigne lorsque la température dans le caisson de chauffage atteint ledit seuil de température de régulation.

14. Radiateur sèche-serviette (10) selon l'une quelconque des revendications précédentes, dans lequel chaque caisson de chauffage définit :
- une dimension longitudinale maximum le long de l'axe d'alimentation (A) entre un bord supérieur longitudinal et un bord inférieur longitudinal, et
- une dimension transversale maximum prise transversalement à l'axe d'alimentation (A) entre un bord supérieur transversal et un bord inférieur transversal,
dans lequel :
* la première portion d'extrémité (50) est définie comme étant une portion du caisson de chauffage s'étendant, à partir du bord supérieur transversal et vers le bord inférieur transversal, sur une distance inférieure ou égale à 30% de la dimension transversale maximum,
* la deuxième portion d'extrémité (52) est définie comme étant une portion du caisson de chauffage s'étendant, à partir du bord supérieur longitudinal et vers le bord inférieur transversal, sur une distance inférieure ou égale à 30% de la dimension longitudinale maximum.

15. Radiateur sèche-serviette (10) selon la revendication 14 en combinaison avec la revendication 9, dans lequel :
* la troisième portion d'extrémité (54) est définie comme étant une portion du caisson de chauffage s'étendant, à partir du bord inférieur transversal et vers le bord supérieur transversal, sur distance inférieure ou égale à 30% de la dimension transversale maximum,
* la quatrième portion d'extrémité (56) est définie comme étant une portion du caisson de chauffage s'étendant, à partir du bord inférieur longitudinal et vers le bord supérieur transversal, sur une distance inférieure ou égale à 30% de la dimension longitudinale maximum.

16. Radiateur sèche-serviette (10) selon l'une des revendications précédentes, comprenant en outre au moins un ventilateur disposé dans la colonne d'alimentation en air (12) pour alimenter en air un ou plusieurs parmi les caissons de chauffage (30), chaque caisson de chauffage (30) comprenant au moins un orifice de sortie (46) d'air de sorte que l'air alimentant un caisson de chauffage (30) circule depuis au moins un orifice d'alimentation (26) de la colonne d'alimentation en air (12) vers ledit au moins un orifice de sortie (46), ledit au moins un organe de chauffage (44) étant positionné dans ledit caisson de chauffage (30) de sorte à chauffer l'air circulant à l'intérieur du caisson de chauffage (30).
